Europäisches Patentamt

European Patent Office

Office européen des brevets

(19)

(11) Veröffentlichungsnummer : **0 131 061**
**B1**

(12) **EUROPÄISCHE PATENTSCHRIFT**

(45) Veröffentlichungstag der Patentschrift :
15.04.87

(21) Anmeldenummer : 83106735.0

(22) Anmeldetag : 08.07.83

(51) Int. Cl.⁴ : **H 02 K 44/06**

(54) Lineare Induktionspumpe zum Fördern von elektrisch leitfähigen Flüssigkeiten.

(43) Veröffentlichungstag der Anmeldung :
16.01.85 Patentblatt 85/03

(45) Bekanntmachung des Hinweises auf die Patenterteilung : 15.04.87 Patentblatt 87/16

(84) Benannte Vertragsstaaten :
AT BE CH DE FR GB IT LI LU NL SE

(56) Entgegenhaltungen :
FR-A- 1 593 007
US-A- 4 287 444
Soviet Inventions Illustrated Week D 52, 10 February
1982 Section K 05, M 22, X 11
Soviet Inventions Illustrated Week E 39, 10 November
1982 Section X 11

(73) Patentinhaber : NITROKEMIA IPARTELEPEK
Pf. 45
H-8184 Füzfögyártelep (HU)

(72) Erfinder : Kiss, Béla, Dipl.-Ing.
Gagarin un. 1.
Balatonfüzfö (HU)
Erfinder : Durecz, Imre
Bajcsj-Zsilinszky u. 5.
Litér (HU)

(74) Vertreter : Patentanwälte Viering & Jentschura
Steinsdorfstrasse 6
D-8000 München 22 (DE)

## Beschreibung

Die Erfindung betrifft eine lineare Induktionspumpe, mit welcher das Fördern von elektrisch leitfähigen flüssigen Stoffen unter günstigeren Betriebsbedingungen als bei bekannten Ausführungsformen ermöglicht wird.

Ähnlich wie die bekannten Induktionspumpen gleicher Funktion kann auch die erfindungsgemäße Induktionspumpe zum Fördern von verschiedenen elektrisch leitfähigen Flüssigkeiten und Flüssigmetallen verwendet werden. Es wirkt bei der erfindungsgemäßen Induktionspumpe besonders vorteilhaft, daß die Vorteile einer Induktionspumpe auch beim Fördern von Flüssigmetallen niedrigerer elektrischer Leitfähigkeit unter günstigen Bedingungen ausgenutzt werden können. Die erfindungsgemäße Induktionspumpe wurde zum Fördern von Quecksilber entwickelt, dessen Behandlung gewöhnlich Probleme hervorruft. Mit der erfindungsgemäßen Induktionspumpe kann das Quecksilber auch bei Umgebungstemperatur zuverlässig auf einer von der Umgebung gut isolierten Förderstrecke gefördert werden. Im weiteren wird eine als Quecksilberpumpe verwendete erfindungsgemäße Induktionspumpe dargestellt ; durch die Vorteile der erfindungsgemäßen Induktionspumpe werden jedoch auch bei der Förderung anderer Metalle besserer elektrischer Leitfähigkeit die Anwendungsbedingungen für eine solche Technologie verbessert.

Die bereits am Ende des vorigen Jahrhunderts bekannte lineare Elektromaschine (Linearmotor) ist in den letzten 2-3 Jahrzehnten allmählich in den Vordergrund getreten, da die Bedingungen für ihre vielfältige Anwendung inzwischen reif geworden sind. Ihre Vorteile gegenüber den Drehmaschinen haben die Ingenieure dazu bewegt, daß sie die eine Fortbewegung erfordernden Aufgaben durch Maschinen mit fortschreitendem Kraftfeld lösen.

In der Metallurgie und in der Atomtechnik wurden Linearmotoren als Induktionspumpe auch zum Fördern von Flüssigmetallen verwendet, wobei der sich bewegende Teil der linearen Elektromaschine durch das zu fördernde Flüssigmetall selbst gebildet wird. In den bekannten Anwendungsformen werden Metalle hoher Leitfähigkeit, z. B. Stahl, Natrium oder Kalium gefördert, deren Schmelzpunkte die übliche Umgebungstemperatur bedeutend übertreffen. Die Fördertemperatur des flüssigen Stahles liegt wesentlich höher über dem Curie-Punkt, so daß er sich während des Förderns als nichtferromagnetisches Medium verhält. Über den Stand der Technik ist eine kurze Übersicht in dem Band « Lineáris villamosmotorok » (Lineare Elektromotoren) von K. Pawluk und W. Szczepanski, Technischer Verlag, Budapest 1977, im Kapitel 8.3 zu finden.

Es sind für solche Anwendungsformen des Linearmotors zwei unterschiedliche Typen bekannt. Der eine Typ ist eigentlich keine lineare Elektromaschine : in ihrem zylinderförmigen Stator wird ein Drehfeld hergestellt und in dem großen ringförmigen und zylindrischen Eisenkern des Rotors sind spiralförmige Nuten ausgebildet. Die zu fördernde Flüssigkeit bewegt sich unter der Wirkung des Drehfeldes entlang der spiralförmigen Förderstrecke. Eine Komponente ihrer Bewegung ist eine Drehbewegung, wobei die dazu verbrauchte Energie als Verlustleistung betrachtet werden muß. Eine andere Komponente ihrer Bewegung ist die gewünschte Fortbewegung. Außer dieser Verlustleistung wirkt es auch nachteilig, daß die Ausgestaltung und die Fertigungstechnologie ziemlich kompliziert ist, was auch die Inbetriebhaltung beeinflußt ; z. B. muß abgekühltes Metall in der Spiralstrecke herausgebrochen werden.

Der andere Typ kann konsequent als lineare Elektromaschine gelten, da der in der Bohrung des Stators angeordnete Sekundärteil selbst durch eine in einer geeigneten Umhüllung (z. B. in einem Rohr mit Rechteckquerschnitt) strömende elektrisch leitende Flüssigkeit gebildet ist, welche die Energie des linearen Kraftfeldes unmittelbar (und eindeutig) als Fortbewegungsenergie ausnutzt. Die Realisierungsprobleme des bekannten Typs sind in der erwähnten Literaturstelle zu finden. Ein solches Problem bedeutet z. B. der sog. Pinch-Effekt, durch den die anwendbare Stromdichte begrenzt ist, und die konstruktiven Forderungen nach einer hohen nützlichen Leistung bei einem niedrigen Wirkungsgrad (im Falle des erwähnten Stahlförderns beträgt der Wirkungsgrad etwa 0,1 %). Die Anwendung einer linearen Induktionspumpe erbringt für Metalle hoher elektrischer Leitfähigkeit selbst bei solchen Schwierigkeiten Vorteile, da dies mit geringeren Transportkosten als bei dem mechanischen Fördern und mit einer mehrfachen Produktivität verbunden ist.

Bei dem Fördern von Metallen niedrigerer spezifischer elektrischer Leitfähigkeit treten bei dieser bekannten Ausführungsform die bestehenden Schwierigkeiten vielfach auf, wobei der geringe Leitfähigkeitswert weitere Hindernisse, z. B. eine untragbare Volumenerhöhung bewirkt. Soll z. B. Quecksilber gefördert werden (dessen Leitfähigkeit das Fünfzigstel derjenigen von Kupfer und das Dreiundsechzigstel derjenigen von Eisen beträgt), so ist die notwendige nützliche Leistung nur bei einer auf mehr als fünfzigmal erhöhten Baugröße erreichbar, was die rentable Verwirklichung unter Betriebsbedingungen ausschließt.

Eine Abhilfe soll hier durch die Erfindung geschaffen werden.

Es ist auch eine lineare Induktionspumpe der im einleitenden Teil des Patentanspruchs 1 angegebenen Art bekannt (FR-A-1 593 007), bei welcher der Förderspalt von Rohren aus feuerfestem Isoliermaterial wie Aluminiumoxyd begrenzt ist, an deren Innenumfang bzw. Außenumfang Metallrohre angrenzen können, um durch Induktionserwärmung das in die Induktionspumpe vorgewärmt eingeführte Flüssigmetall während des Förderns nachzuwärmen. Zwischen dem inneren Metallrohr und dem Eisenkern ist ein Spalt vorgesehen, während zwischen dem äußeren Metallrohr und dem Stator ein thermisch isolierendes Rohr vorgesehen ist, das an der Umfangsfläche des Stators anliegen kann. Diese bekannte Induktionspumpe dient insbesondere zum Fördern von Metallschmelzen aus Zink und Aluminium.

Die Erfindung beruht insbesondere auf der Erkenntnis, daß die Aufgabe, eine lineare Induktionspumpe zum Fördern von elektrisch leitfähigen Flüssigkeiten zu schaffen, gelöst wird, die Vorteile einer Induktionspumpe auch beim Fördern von Flüssigmetallen niedrigerer Leitfähigkeit ausnutzbar sind und die bekannten Probleme auch bei Metallen hoher Leitfähigkeit vermindert werden können (z. B. Wegfall der durch den Pinch-Effekt verursachten Beschränkungen), wenn die gemäß dem einleitenden Teil des Anspruchs 1 ausgebildete Induktionspumpe so ausgestaltet wird, daß das an der Umfangsfläche der Bohrung des Stators anliegende Rohr aus Kunststoffmaterial besteht und der den Förderspalt bildende Luftspalt an der Innenseite von dem Eisenkern begrenzt ist, wobei der Eisenkern für einen niedrigen Wirbelverlust in Richtung des Hauptflusses geblättert ausgebildet ist. Vorzugsweise sind beide Enden der Induktionspumpe von je einem zu der Fließrichtung querstehenden Flansch abgeschlossen, der von dem Förderspalt durchdrungen ist und an dem sowohl der Stator wie auch der Eisenkern unlösbar, vorzugsweise über Schweißnähte, befestigt sind.

Die Erfindung wird nachstehend anhand eines Ausführungsbeispiels näher erläutert. Es zeigen in der Zeichnung :

Figur 1 einen Schnitt eines schematisch dargestellten Ausführungsbeispieles der erfindungsgemäßen Induktionspumpe,

Figur 2 eine vorteilhafte Anwendung eines Ausführungsbeispieles der erfindungsgemäßen Induktionspumpe bei der Chlorgewinnung mit Hg-Kathode, und

Figur 3 die Anwendung der Induktionspumpe gemäß Fig. 2, wobei die Trennzelle senkrecht angeordnet ist.

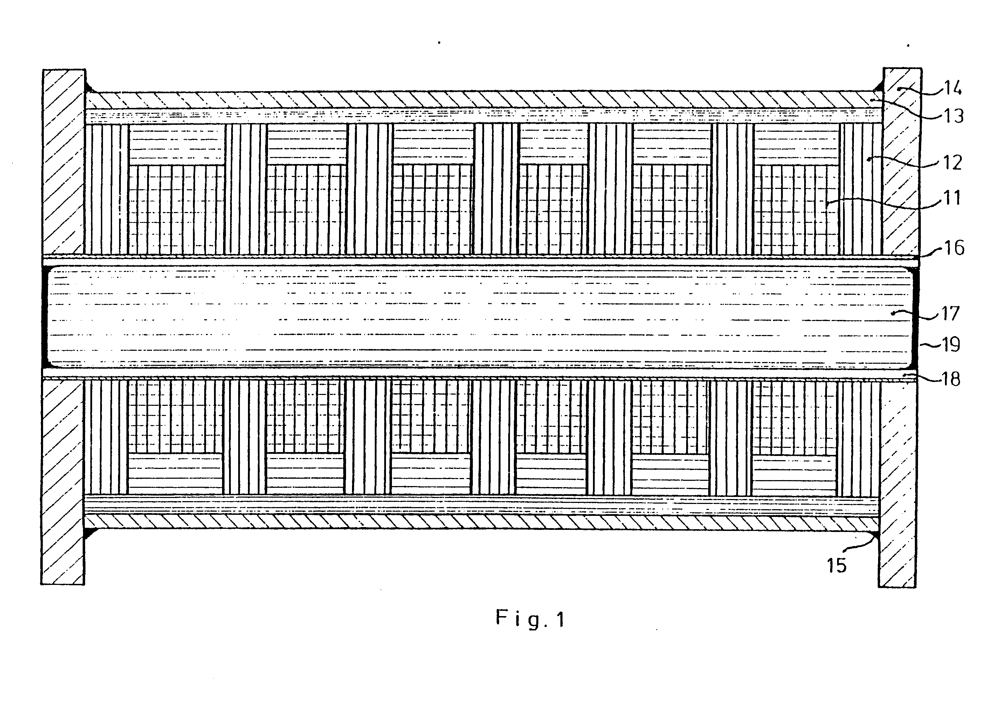

Wie es aus Fig. 1 ersichtlich ist, sind beide Enden eines Wicklungen 11 und diese axial voneinander trennende und am radial äußeren Umfang umschließende Eisenkerne 12 enthaltenden Stators von je einem radial verlaufenden Flansch 14 aus Metall begrenzt, der in dem gezeigten Falle mit einem äußeren Mantel 13 des Stators über Schweißnähte 15 verbunden ist. An der Innenumfangsfläche des Stators, d. i. an der Umfangsfläche der Statorbohrung, liegt ein dünnwandiges Kunststoffrohr 16 unmittelbar an, in welchem ein weiterer geblätterter Eisenkern 17 koaxial angeordnet ist, wobei ein Förderspalt von einem zwischen der Innenumfangsfläche des Rohres 16 und dem Außenmantel des Eisenkernes 17 freigehaltenen Luftspalt 18 gebildet ist. Das Kunststoffrohr 16 und der Förderspalt setzen sich durch die Flansche 14 hindurch fort, und zwar so, daß eine Bohrung mit einem dem Außendurchmesser des Kunststoffrohres 16 entsprechenden Durchmesser in den Flanschen 14 ausgebildet ist. Über diese Bohrungen sind sowohl das Kunststoffrohr 16 als auch der Eisenkern 17 geführt, wobei der Eisenkern 17 durch eine weitere Schweißnaht 19, gegebenenfalls unter Zwischenschaltung von Stegen, an den Flanschen 14 befestigt ist.

Es folgt aus der Theorie der Elektromaschinen, daß die sich aus der niedrigen spezifischen Leitfähigkeit des Quecksilbers ergebende Schwierigkeit überbrückt werden kann, ohne daß die Abmessungen der Pumpe auf das Mehrfache erhöht werden müssen, und der Induktionswert bei relativ kleinem Volumen mit einer einfachen Fertigungstechnologie und mit geringem Aufwand in entsprechendem Maße erhöht werden kann, wenn ein einen Eisenkern enthaltender Sekundärteil verwendet wird. Bei der erfindungsgemäß ausgebildeten Förderpumpe kann ein eventuell auftretender Pinch-Effekt vernachlässigt werden, wodurch auch die Förderschwierigkeiten, kritische Planungsmomente des Schaltkreises der in bekannter Weise ausgestalteten linearen Induktionspumpen, vermieden werden können.

Die Auslegung der erfindungsgemäßen Induktionspumpe soll nachstehend beschrieben werden, wobei die Bezeichnungen bedeuten :

$V_s$ — Synchrongeschwindigkeit (m/s)

$f$ — Frequenz (Hz)

$F_i$ — induzierte Druckkraft (N)

$\rho H_g$ — spezifischer Widerstand des Quecksilbers $\rho H_g = 95{,}8 \times 10^{-8}$ ($\Omega$m)

$U_{11}$ — Spannung an der Primärwicklung (V)

$n_{11}$ — Primärwindungszahl

$X_{S1}$ — Induktanz einer Primärwicklung

$X_{m1}$ — Magnetisierungs induktanz einer Primärwicklung

$D_o$ — Durchmesser des sekundären Eisenkernes (m)

$D_r$ — innerer Durchmesser des Kunststoffrohres (m)

$\Delta_w$ — Wicklungsbreite (m)

$\tau$ — Polteilung (m)

$S$ — Schlupf

$$S = \frac{V_s - V}{V_s},$$

wobei

$V$ — Bewegungsgeschwindigkeit des Quecksilbers (m/s)

$\Delta Fe$ — Breite des Blechpaketes zwischen den Primärwicklungen (m) ;

$D_1$ — Innendurchmesser der Wicklung und Außendurchmesser des Kunststoffrohres (m) ;

$\omega$ — Netzkreisfrequenz ($2\pi f$)

$\mu_o$ — Luftpermeabilität $\mu_o = 4 \times 10^{-7}$ (H/m)

$H_o$ — statische Förderhöhe der Quecksilberpumpe (m)

$S_k$ — Kippschlupf $S_k = R_{21}/X_{S1}$, wobei

$$R_{21} = \rho\,Hg \times \frac{D_r + D_0}{(D_r - D_0)\,\Delta_w}.$$

Wird eine symmetrische Dreiphasenspannung an den Wicklungen des Stators angelegt, so bewegt sich der Hauptfluß mit einer Synchrongeschwindigkeit $V_s = 2\pi f$ fort. Nach der Aufnahme des Ersatzbildes und nach der Anwendung der obigen Bezeichnung sieht die Formel der induzierten Druckkraft pro Induktionseinheit wie folgt aus :

$$F_i = K \times \frac{D_0^4}{\left(1 + \dfrac{X_{S1}}{X_m}\right)^2} \times \frac{\Delta_w \times (D_r - D_0)}{\tau \times (D_r + D_0)} \times S,$$

wobei die Konstante K zu der Wicklungszahl der Maschine und der angelegten Spannung $U_{11}$ proportional und zu der Frequenz f, der Windungszahl der Primärwicklung und dem spezifischen Widerstand des zu fördernden Mediums umgekehrt proportional ist. Es ergibt sich aus der Formel, daß die induzierte Druckkraft $F_i$ durch die Erhöhung des Wertes des Durchmessers $D_0$ des sekundären Eisenkernes am schnellsten wächst, der in der vierten Potenz in die Formel eingeht.

Der Luftspalt der Quecksilberpumpe beträgt das Mehrfache des Luftspaltes sonstiger Elektromaschinen, da das Quecksilber in diesem Luftspalt fließt. Die Bemessung gilt mit entsprechender Korrektion auch für von Luft abweichende Dielektriken. Die Magnetisierungsinduktanz einer Primärwicklung beträgt in der Phase S :

$$X_{m1} = 2 \times \omega \times \mu_0 \times n_{11} \times \frac{D_0 \times \Delta_{Fe}}{D_r - D_0},$$

während dieser Wert in den Phasen R und T das 0,833 fache bei Maschinen mit drei Wicklungen, und das 0,916-fache bei Maschinen mit sechs Wicklungen pro Pol und Phase beträgt.

Die Druckkraft pulsiert darausfolgend, was aber die Strömung der geförderten Flüssigkeit nicht beeinflußt.

Der Wert der Blindströme kann durch die Erhöhung der Werte $n_{11}$ und $\Delta_{Fe}$ verringert werden, welcher Wert von der an eine Wicklung anlegbaren Spannung begrenzt wird.

Der Korrektionsfaktor zwischen den Phasen stammt von der Auseinanderfaltung des Drehfeldes.

Der Maximalwert der abgegebenen Leistung tritt bei S=0,5 auf. Dann beträgt der Wirkungsgrad 50 % ($S_k \gg 1$).

Die statische Förderhöhe ist durch den im Quecksilber hergestellten maximalen Druck bestimmt. Sie beträgt

$$H_0 = 3\,705 \frac{D_0^4}{\left(1 - \dfrac{X_{S1}}{X_{m:}}\right)^2} \times \frac{\Delta_w}{\tau \times (D_r + D_0)^2}$$

für Quecksilber bei einem Induktionswert von 1 Vs/m. Die statische Förderhöhe kann vorteilhaft durch die Erhöhung des Wertes $D_0$ gesteigert werden.

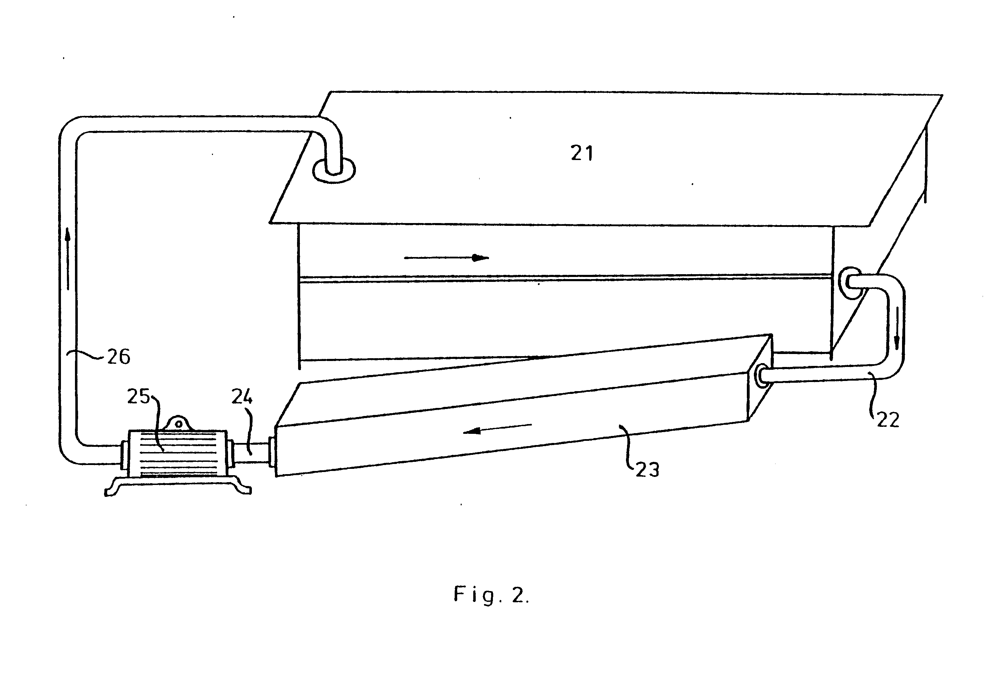

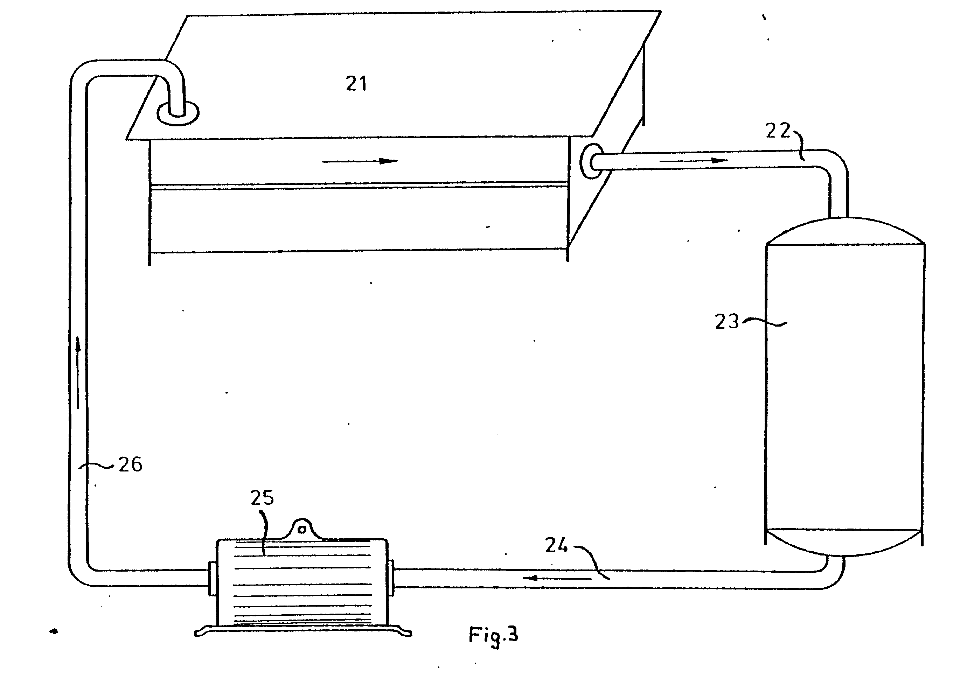

Aus der Fig. 2 ist es ersichtlich, daß die Förderstrecke des Quecksilbers ein Elektrolysebad 21 durchquert, dann in eine geneigte Trennzelle 23 über eine Rohrleitung 22 gelangt und aus der Zelle 23 über eine weitere Rohrleitung 24 in die erfingungsgemäße Induktionspumpe 25 mündet, die über eine weitere Rohrleitung 26 mit dem Elektrolysebad 21 verbunden ist. (Die an sich bekannte Technologie der Chlorgewinnung soll hier nicht ausführlich beschrieben werden.) Aus den Figuren 2 und 3 liegt es für den Fachmann nahe, daß diese Fördermethode, verglichen mit den herkömmlichen Methoden, außerordentliche Vorteile aufweist.

Die in Fig. 3 dargestellte Anordnung weicht von der Anordnung in der Fig. 2 insofern ab, als die Trennzelle in Fig. 3 senkrecht angebracht ist.

Das Kunststoffrohr 16 in der Induktionspumpe ist aus einem Material hergestellt, das der chemischen Einwirkung des Quecksilbers dauerhaft widersteht, und mit einer Wanddicke versehen, die den von der Förderhöhe stammenden Druck verträgt. Die Blattrichtung des Eisenkernes 17 entspricht der Richtung des Hauptflusses.

Aus den obigen Ausführungen ist ersichtlich, daß die erfindungsgemäße Induktionspumpe die Anwendung dieser Technologie auch bei Flüssigmetallen niedrigerer spezifischer elektrischer Leitfähigkeit ermöglicht, ferner daß diese erfindungsgemäße Lösung auch bei gut leitenden Metallen verwendet werden kann, da die in den bekannten Ausführungsformen auftretenden Probleme entfallen. Die wichtigsten Vorteile einer erfindungsgemäßen Quecksilberpumpe sind die folgenden:

— das Quecksilber zirkuliert in einem geschlossenen System und gelangt nicht in die Umgebung hinaus, ferner kann das Leitungssystem der Pumpe jedwelcher Technologie angepaßt werden,

— die komplizierte Abdichtung des Rotors der herkömmlichen Quecksilber-Pumpen sowie die speziellen konstruktiven Lösungen können wegfallen,

— die Förderhöhe kann theoretisch grenzenlos gesteigert werden (bei herkömmlichen Quecksilber-Pumpen kann die geringe Förderhöhe nicht erhöht werden),

— die Pumpe enthält kein bewegliches oder sich drehendes Teil,

— eine Bewegung wird ausschließlich durch das zu fördernde Medium ausgeübt, und diese Bewegung ist eine eindeutige Fortbewegung,

— in den bekannten Quecksilber-Pumpen bilden der Antriebsmotor und die Pumpe zwei selbstständige verköppelte Einheiten; dagegen bilden diese in der erfindungsgemäßen linearen Induktionspumpe eine einzige und einen besseren Wirkungsgrad aufweisende Einheit,

— der einfache Aufbau der Pumpe ist aus Betriebssicherheitsgründen vorteilhaft und benötigt kaum eine Wartung,

— da die Wandung des Förderraumes aus Kunststoff gefertigt ist, kann die chemische Wechselwirkung des Rohres und des Flüssigmetalls durch Auswahl des entsprechenden Kunststoffes beseitigt werden,

— für die Temperatur der zu fördernden Flüssigkeit kann ein entsprechend hitzebeständiger Kunststoff gewählt werden und im Falle des Förderns von Quecksilber kann die Fördertemperatur mit der Umgebungstemperatur übereinstimmen,

— die erfindungsgemäße Pumpe ist unempfindlich gegen die Umgebungsbedingungen, kann mit der Technologie der herkömmlichen Elektromaschinen hergestellt werden und es kann eine Wasserkühlung bei höheren Betriebstemperaturen ausgestaltet werden,

— die Förderhöhe und die Fördergeschwindigkeit können entsprechend der Förderbedingungen elektrisch verändert werden,

— die Pumpe kann in beliebiger Betriebslage bei geringem Geräusch und ohne Schwingungen betrieben werden.

Natürlich können statt der waagerechten Trennzellen in der Chlorgewinnung mit Quecksilberkathode moderne senkrechte Trennzellen mit besserem Wirkungsgrad verwendet werden, da deren Förderhöhe mit der erfindungsgemäßen Pumpe sichergestellt werden kann.

## Patentansprüche

1. Lineare Induktionspumpe zum Fördern von elektrisch leitfähigen flüssigen Stoffen, vorzugsweise zum Fördern von Quecksilber, mit einem zylinderförmigen Stator (11, 12), in dessen Bohrung ein Eisenkern (17) koaxial zu dem Stator und ein Rohr (16) angeordnet sind, wobei zwischen dem Rohr (16) und dem Eisenkern (17) ein von dem Rohr begrenzter Förderspalt in Form eines Luftspaltes (18) ausgebildet ist, dadurch gekennzeichnet, daß das an der Umfangsfläche der Bohrung des Stators (11, 12) anliegende Rohr (16) aus Kunststoffmaterial besteht und der Luftspalt (18) an der Innenseite von dem Eisenkern (17) begrenzt ist, der in Richtung des Hauptflusses geblättert ausgebildet ist.

2. Induktionspumpe nach Anspruch 1, dadurch gekennzeichnet, daß beide Enden der Induktionspumpe von je einem zu der Fließrichtung querstehenden Flansch (14) abgeschlossen sind, wobei der Förderspalt die Flansche (14) durchdringt, und daß an den Flanschen (14) sowohl der Stator als auch der Eisenkern (17) unlösbar, vorzugsweise mittels Schweißnähten (15, 19), befestigt sind.

## Claims

1. A linear induction pump for the conveyance of electrically conductive liquids, preferably for the conveyance of mercury comprising a cylinder shaped stator (11, 12), in the borehole of which an iron core (17) coaxially to the stator and a tube (16) are arranged in a way that a conveyor gap developed as an air gap (18) and bounded by the tube is formed between the tube (16) and the iron core (17), characterized in that the tube (16) butting against the circumferance surface of the borehole of the stator (11, 12) consists of synthetic material and that the air gap (18) is bounded at its inner side by the iron core (17), which is laminated in the direction of the main flux.

2. Induction pump as claimed in claim 1, characterized in that each end of the induction pump is terminated by a flange (14) transverse to the direction of flow, the conveyor penetrating the flanges (14),

**0 131 061**

and that the stator (11, 12) as well as the iron core (17) are mounted undetachably, preferably by means of welding seams (15, 19), to the flanges (14).

**Revendications**

1. Pompe à induction linéaire pour refouler des substances liquides conductrices de l'électricité, de préférence pour refouler du mercure, comportant un stator de forme cylindrique (11, 12) dans l'alésage duquel sont disposés un noyau en fer (17) coaxial au stator et un tube (16), un intervalle de refoulement délimité par le tube étant réalisé sous la forme d'un entrefer (18) entre le tube (16) et le noyau en fer (17), caractérisée en ce que le tube (16) appliqué sur la surface périphérique de l'alésage du stator (11, 12) est constitué de matière plastique et l'entrefer (18) est délimité sur le côté intérieur par le noyau en fer (17), qui est pourvu d'une structure feuilletée dans la direction du flux principal.

2. Pompe à induction selon la revendication 1, caractérisée en ce que les deux extrémités de la pompe à induction sont fermées chacune par une flasque (14) orientée perpendiculairement à la direction d'écoulement, l'intervalle de refoulement traversant les flasques (14), et en ce qu'aussi bien le stator que le noyau en fer sont fixés de façon immobile sur les flasques (14), de préférence au moyen de cordons de soudure (15, 19).

6

Fig. 1

0 131 061

Fig. 2.

21

26

25 24

23

22

Fig.3